# EUROPÄISCHE PATENTSCHRIFT

(11) **EP 1 736 335 B1**
(45) Veröffentlichungstag und Bekanntmachung des Hinweises auf die Patenterteilung: **27.10.2010**
(21) Anmeldenummer: 06007251.9
(22) Anmeldetag: 06.04.2006
(51) Int. Cl.: B60J 1/20

(54) **Heckfensterrollo mit vollständiger Schlitzabdeckung durch das Auszugsprofil**
Roller blind for rear window with complete slot cover by the pull-out element
Store à enrouleur pour fenêtre arrière avec obturateur de fente par le tiroir

(30) Priorität: 23.06.2005 DE 102005029559
(43) Veröffentlichungstag der Anmeldung: 27.12.2006
(73) Patentinhaber: BOS GmbH & Co. KG, 73760 Ostfildern (DE)
(72) Erfinder: Schlecht, Werner, 71665 Vaihingen/Enz-Aurich (DE)
(74) Vertreter: Rüger, Barthelt & Abel Patentanwälte

(56) Entgegenhaltungen:
- EP-A- 1 099 579
- EP-A- 1 099 580
- EP-A- 1 211 109
- EP-A- 1 591 287
- EP-A- 1 609 648

## Beschreibung

Hochwertige Limousinen werden heutzutage überwiegend mit Heckfensterrollos serienmäßig ausgestattet. Diese Heckfensterrollos sind, wie dies die EP 1 211 109 zeigt, unterhalb der Hutablage unsichtbar angeordnet. Zu diesen Rollos gehört eine unterhalb der Hutablage drehbar gelagerte Wickelwelle, an der mit einer Kante die Rollobahn befestigt ist. Die andere Kante der Rollobahn ist in einem Auszugsprofil verankert. Das Auszugsprofil ist endseitig in Führungsschienen geführt, die neuerdings in der Seitenverkleidung der C-Säule integriert sind.

Aufgrund der Karosserieform ist die Breite des Heckfensters in der Nähe der Gürtellinie, also knapp oberhalb der Unterkante und somit auf der Höhe der Hutablage, größer als in der Nähe der Dachkante.

Daraus resultiert ein unterschiedlicher Abstand der Führungsschienen voneinander. Das Auszugsprofil ist hieran angepasst insofern, als es teleskopartige verschiebliche Endstücke aufweist.

Aus ästhetischen und Sicherheitsgründen ist es zweckmäßig, den Schlitz durch den die Rollobahn beim Aufspannen ausfährt, zu verschließen wenn die Rollobahn vollständig aufgewickelt ist.

In der Vergangenheit hat man dies durch einen Deckel erreicht, der an einem der Schlitzränder anscharniert ist und entweder beim Ausfahren gegen die Wirkung einer Feder aufgestoßen wird oder ein Einfahren gegen die Wirkung einer Feder geschlossen wird.

Der montagetechnische Aufwand zur Lagerung des zusätzlichen Deckels ist nicht unerheblich.

Darüber hinaus ist aus der DE 602 00 410 T2 (EP 1 236 598 A1) ein Heckscheibenrollo bekannt, bei dem das Auszugsprofil über Hebel aus der eingefahrenen Position in die ausgefahrene Position überführt wird. In der ausgefahrenen Position wird das Auszugsprofil lediglich über diese Hebel getragen. Damit die beim Betrieb des Fahrzeugs auftretenden Beschleunigungskräfte das Auszugsprofil nicht gegen die Scheibe schlagen lassen, ist es mit Andruckrollen versehen.

Da die erforderliche Breite für das Auszugsprofil im Bereich der Fensteroberkante kürzer ist als die Fensterunterkante lang, ist das Auszugsprofil mit Endklappen versehen, die an einem Mittelstück des Auszugsprofils gelenkig anscharniert sind. Darüber hinaus ist in der Druckschrift die Möglichkeit beschrieben, die Endstücke auch verschieblich zu gestalten, ohne dass hierzu nähere Angaben enthalten sind.

Ausgehend hiervon ist es Aufgabe der Erfindung ein in Führungsschienen geführtes Heckfensterrollo zu schaffen, das zum Verschließen des Schlitzes ohne Deckel auskommt.

Diese Aufgabe wird erfindungsgemäß durch das Heckscheibenrollo mit den Merkmalen des Anspruches 1 gelöst.

Bei dem neuen Heckscheibenrollo ist eine Wickelwelle vorgesehen, an der mit einer Kante die Rollobahn befestigt ist. Die andere von der Wickelwelle abliegende Kante ist mit einem Auszugsprofil verbunden. Das Auszugsprofil setzt sich aus einem Mittelstück und zwei Endstücken zusammen, die gegenüber dem Mittelstück verschiebbar sind. Das Mittelstück und die verschiebbaren Endstücke sind so gestaltet bzw. bemessen, dass sie bei eingefahrenem Rollo den Schlitz verschließen. Mit an deren Worten, bei eingefahrenem Rollo entspricht die Länge des Auszugsprofils der Länge des Schlitzes, gemessen zwischen den Führungsschienen, die Breite des Auszugsprofils ist an allen Stellen einschließlich gleich der Breite des Auslaufschlitzes für die Rollobahn, oder breiter als dieser Schlitz. Bei ausgefahrenem Rollo hingegen verkürzt sich die Länge des Auszugsprofils entsprechend dem Abstand den die Führungsschienen jeweils voneinander haben.

Das Endstück angenähert die Form eines flachgedrückten Bechers, mit einem Boden und einem daran angeformten Kragen. Der Kragen ist in Längsrichtung mit einem Schlitz versehen, der von zwei Schlitzrändern begrenzt ist. Wenigstens einer der Schlitzränder kann ferner ist in wenigstens einer der seitlichen Nuten des Mittelstücks aufgenommen.

Diese Maßnahme macht einen zusätzlichen Deckel zum Verschließen des Schlitzes oder Seitendeckeln entbehrlich, wie sie in der Vergangenheit verwendet wurden, wenn zwar durch das Mittelstück der Schlitz verschlossen wurde, die Endbereiche des Schlitzes jedoch frei bleiben würden.

Wenn das Auszugsprofil endseitig in Führungsschienen geführt ist, erstreckt sich der Schlitz über die gesamte Breite der Hutablage.

Die Führungsschienen sind vorteilhafterweise in der Innenverkleidung des Fahrzeugs integriert, was zu einem gefälligen Gesamteindruck führt.

Um den Schlitz gut zu verdecken kann das Auszugsprofil entweder so breit sein wie der Schlitz, oder er kann geringfügig breiter als der Schlitz sein. Im einem Falle ist ein Eintauchen des Auszugsprofils in den Schlitz möglich, während im anderen Falle das Auszugsprofil aufliegt. Die letzte Variante ist unempfindlicher gegenüber Montagetoleranzen.

Eine besonders haltbare Anordnung wird geschaffen, wenn das Mittelstück des Auszugsprofils ein Aluminiumstrangpressprofil ist.

Das Mittelstück kann aus Gewichtsgründen und zur Führung der Endstücke einen in Längsrichtung durchgehenden Führungskanal enthalten. Das Mittelstück kann außerdem seitlich zwei Führungsnuten enthalten, die ebenfalls über die Länge des Profils durchgehen.

Das Auszugsprofil enthält zweckmäßigerweise eine durchgehende Nut in der die Rollobahn verankert ist.

Die Länge des Mittelstücks des Auszugsprofils entspricht, zumindest angenähert, der Länge der von der Wickelwelle abliegenden Kante der Rollobahn.

Das Mittelstück weist vorteilhafterweise einen Außenumriss auf, dessen Höhe klein gegenüber der Breite, gemessen in Richtung quer zur Längserstreckung des Mittelstücks, ist.

Eine besonders gute Verankerung des Endstücks wird erreicht, wenn in den seitlichen Nuten des Mittelstücks Teile des betreffenden Endstücks laufen.

Mit dem Boden des Endstücks ist ein Führungsstück verbunden, dass in Längsrichtung über das Führungsprofil übersteht. Vorteilhafterweise ist das Endstück in dem Führungsstück verrastet.

Zur Führung des Endstücks ist eine Führungsstange vorgesehen, die aus dem Endstück in Richtung auf das Mittelstück vorsteht. Die Führungsstange ist in einem entsprechenden Führungskanal des Mittelstücks teleskopartig längsverschieblich geführt.

Um die Endstücke zwangsläufg gegenüber dem Mittelstück in gleicher Richtung zu verschieben ist mit jedem Endstück eine Zahnstange verbunden. Die beiden Zahnstangen sind über ein mittig angeordnetes Zahnrad miteinander formschlüssig gekuppelt, so dass ein Differenzialgetriebe entsteht.

Zum Bewegen der Rollobahn kann ein Elektromotor vorgesehen sein, der über ein Getriebe ein Zahnrad antreibt, das formschlüssig mit linienförmigen Schubgliedern gekuppelt ist. Die Schubglieder laufen in den Führungsschienen.

In der nachfolgenden Figurenbeschreibung ist das Heckscheibenrollo gemäß der Erfindung lediglich schematisch dargestellt. Die Figurenbeschreibung erläutert ein Grundprinzip ohne auf alle denkbaren Abwandlungen einzugehen.

In der Zeichnung ist ein Ausführungsbeispiel des Gegenstandes der Erfindung dargestellt. Es zeigen:
- Fig. 1: eine Außenansicht auf den hinteren Bereich einer Stufenhecklimousine;
- Fig. 2: die Anordnung zum Betätigen des Auszugsprofils in einer stark schematisierten Prinzipdarstellung;
- Fig. 3: eine schematisierte perspektivische Darstellung eines Abschnitts des Mittelstücks sowie eines End- stücks des Auszugsprofils des Heckscheibenrollos nach Fig. 1 und
- Fig. 4: einen Ausschnitt aus der Symmetriereinrichtung für das Mittelstück des Auszugsprofils nach Fig. 1 in einer perspektivischen abgebrochenen Darstellung.

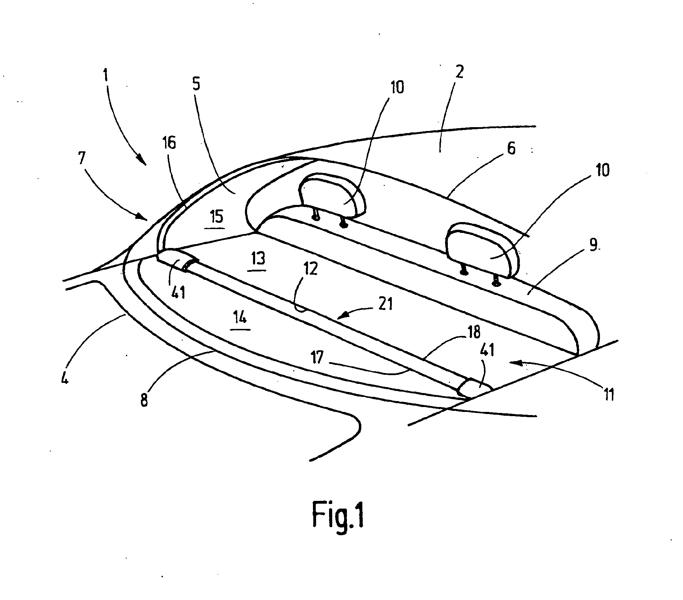

Fig. 1 zeigt in einer stark schematisierten Ausschnittsdarstellung eine Heckpartie 1 einer Stufenhecklimousine. Zu Erkennen ist ein Fahrzeugdach 2 sowie ein Abschnitt eines Kofferraumdeckels 4. Zwischen dem Kofferraumdeckel 4 und dem Fahrzeugdach 2 ist eine linke C-Säule 5, eine Oberkante 6 eines Heckfensters 7 sowie dessen Unterkante 8 zu erkennen. Im Abstand vor dem Heckfenster 7 befindet sich eine Rücksitzlehne 9 einer Rücksitzbank. Auf der Oberkante der Rücksitzlehne 9 sind in bekannter Weise Kopfstützen 10 aufgeständert.

Zwischen der Rückseite der Rücksitzlehne 9 und der Unterkante 8 des Heckfensters 7 erstreckt sich eine Hutablage 11, die durch einen Auszugsschlitz 12 in einen vorderen Abschnitt 13 sowie einen hinteren Abschnitt 14 aufgeteilt ist. Der Auszugsschlitz 12 reicht von einer Innenverkleidung 15 der linken C-Säule 5 bis zu einer nicht erkennbaren Innenverkleidung an der gegenüberliegenden C-Säule. In der Innenverkleidung 15 ist eine Führungsschiene 16 integriert. Eine korrespondierende Führungsschiene befindet sich in der nicht erkennbaren Innenverkleidung der weggeschnittenen C-Säule. Die Führungsschiene 16 beginnt unterhalb der Hutablage 11 und reicht bis in die Nähe der Fensteroberkante 6.

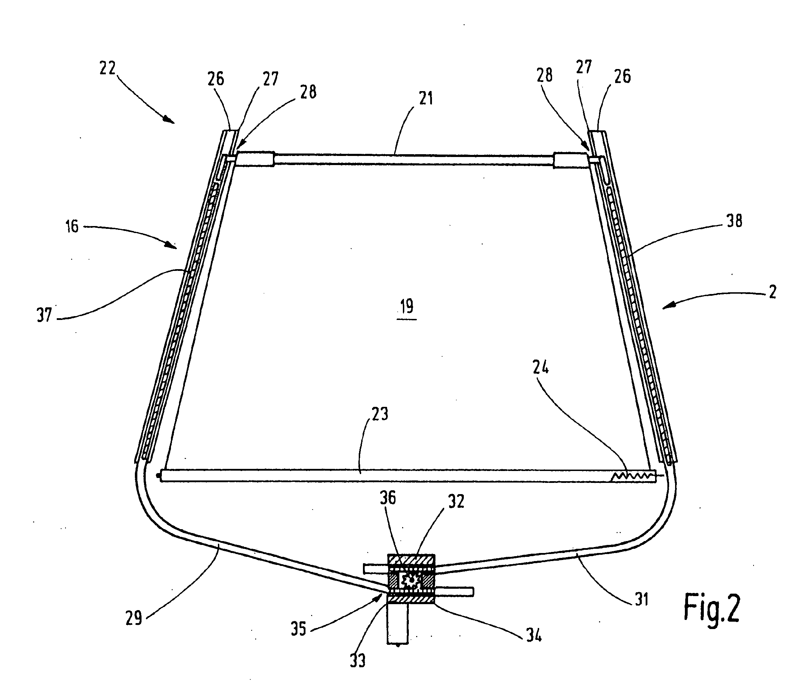

Der Auszugsschlitz 12 wird von zwei zueinander parallelen Schlitzrändern 17 und 18 begrenzt. Der Auszugsschlitz 12 dient dem Ausfahren einer Rollobahn 19 (Fig. 2) und wird bei eingefahrenem Rollo von einem Auszugsprofil 21 vollständig abgedeckt bzw. verschlossen. Die Abdeckung des Auszugsschlitzes 12 reicht von der Innenverkleidung 15 bis zur gegenüberliegenden Innenverkleidung mit Ausnahme eines geringfügigen Spaltes zwischen dem Stirnende des Auszugsprofils und der benachbarten Innenverkleidung 15, um eine störungsfreie Bewegung zu ermöglichen.

Fig. 2 zeigt den prinzipiellen Aufbau eines Heckscheibenrollos 22, wie es in dem Fahrzeug nach Fig. 1 integriert ist.

Zu dem Heckscheibenrollo 22 gehört das bereits erwähnte Auszugsprofil 21, an dem mit einer Kante die Rollobahn 19 befestigt ist. Die andere Kante der Rollobahn ist mit einer rohrförmigen Wickelwelle 23 verbunden, die unterhalb der Hutablage 11 endseitig drehbar gelagert ist. Innerhalb der Wickelwelle 23 befindet sich ein Federmotor 24, durch den die Wickelwelle 23 im Sinne eines Aufwickelns der Rollobahn 19 auf die Wickelwelle 23 vorgespannt ist. Der Federmotor 24 ist dazu einends mit der Wickelwelle 23 verbunden und andernends an einer entsprechenden Karosseriestruktur festgesetzt.

Das Auszugsprofil 21 wird endseitig in der in Fig. 1 erkennbaren Führungsschiene 16 und der weggeschnittenen C-Säule enthaltenen Führungsschiene 25 geführt. Die beiden Führungsschienen 16 und 25 sind aufeinander ausgerichtet und liegen in einer gemeinsamen Fläche deren Erzeugen eine Gerade ist.

In Fig. 2 sind die beiden Führungsschienen 16, 25 gestreckt gezeichnet in der Praxis folgen sie jedoch, zumindest angenähert, dem Verlauf der Seitenkante des Heckfensters 7.

In jeder Führungsschiene 16, 25 ist eine Führungsnut enthalten, die sich aus einer Nutenkammer 26 und einem Nutenschlitz 27 zusammensetzt. Die Weite der Nutenkammer 26 ist größer als die Weite des Nutenschlitzes, so dass sich insgesamt eine hinterschnittene Führungsnut ergibt.

Das Auszugsprofil 21 ragt in einer noch näher beschriebenen Weise mit entsprechenden Führungsstücken 28 in die jeweilige Führungsschiene 16, 25 hinein.

An unteren Ende der beiden Führungsschienen 16, 25 schließen sich steife Führungsrohre 29, 31 an, die die jeweilige Nutenkammer 26 mit einer zugehörigen Bohrung 32, 33 in einem Getriebegehäuse 34 verbinden. Das Getriebegehäuse 34 gehört zu einem Getriebemotor 35, auf dessen Ausgangswelle drehfest ein Zahnrad 36 sitzt. Mit Hilfe des Zahnrads 36 werden formschlüssig zwei biegeelastische linienförmige Schubglieder 37, 38 angetrieben. Die beiden Schubglieder 37 und 38 haben die Gestalt einer im Querschnitt kreisrunden Zahnstange mit einer wendelförmig umlaufenden Verzahnung. Ihre Teilung entspricht der Teilung des Ausgangszahnrades 36. Da die beiden Schubglieder 37, 38 an diametral gegenüberliegenden Seiten des Ausgangszahnrads 36 kämmen, werden sie entgegengesetzt mit derselben Geschwindigkeit vorgeschoben oder zurückgezogen, wenn der Getriebemotor 35 in Gang gesetzt wird.

Speicherrohre, die den nicht benötigten Teil der Schubglieder 37, 38 aufnehmen sind nicht weiter gezeigt, da es auf sie für das Verständnis der Erfindung nicht ankommt.

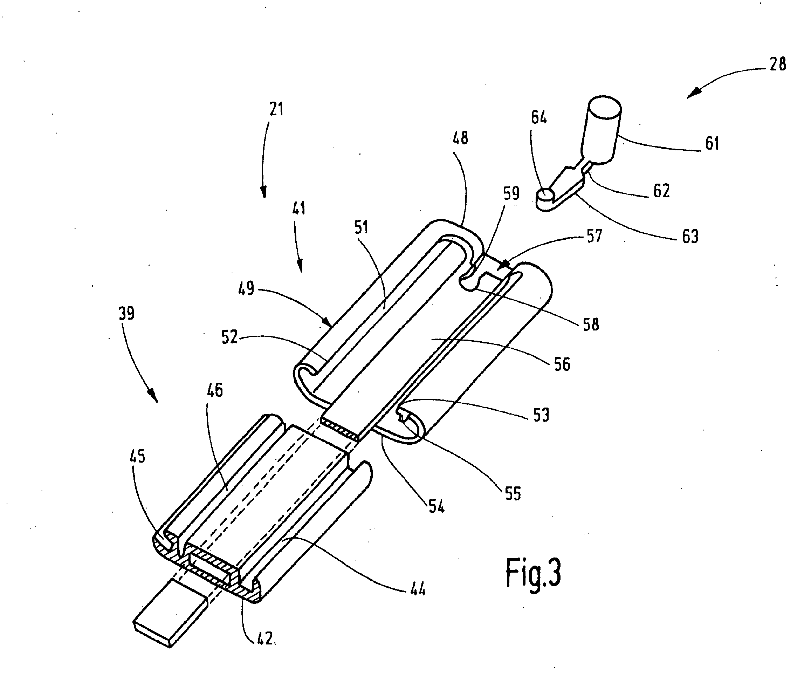

Fig. 3 zeigt in einer perspektivischen Explosionsdarstellung einen Abschnitt des Auszugsprofils 21. Zu dem Auszugsprofil gehört ein Mittelstück 39 sowie zwei Endstücke von denen lediglich das Endstück 41 zu erkennen ist. Mit dem Endstück 41 ist das zugehörige Führungsstück 28 verbunden. Das Mittelstück 39 kann gerade sein wie dargestellt oder leicht gekrümmt um dem Verlauf der Heckscheibe in Querrichtung Rechnung zu tragen.

Das Mittelstück 39 ist ein gerades Aluminiumstrangpressprofil, dessen Querschnittsgestalt länglich ist.

Das Mittelstück 39 weist eine von dem Betrachter weg zeigende im Wesentlichen glatte bzw. ebene Oberseite 42 sowie eine dem Betrachter zugekehrte Unterseite 43 auf. Ober- und Unterseite 42 und 43 sind im Wesentlichen zueinander parallel. Die Breite des Mittelstücks 39 ist so bemessen, dass es entweder zwischen die Stützränder 17 und 18 passt, wie dies Fig. 1 erkennen lässt, oder die Breite ist etwas größer als die Breite des Auszugsschlitzes 12. In diesem Falle liegt das Mittelstück 39 bei eingefahrenem Heckscheibenrollo 22 auf den Schlitzrändern 17, 18 auf.

Das Mittelstück 39 hat über die Länge gesehen einen konstanten Querschnitt.

Über die Länge des Mittelstücks 39 erstrecken sich zwei Führungsnuten 44 und 45. Die Führungsnut 44 verläuft neben der einen Seitenkante und öffnet sich in Richtung zu der Unterseite 43, während die andere Führungsnut 45 sich zur gegenüberliegenden Schmalseite hin öffnet.

Neben der Führungsnut 45 enthält das Mittelstück 39 eine von der Unterseite 43 ausgehende Befestigungsnut 46. In diese ist die Rollobahn 19 mit ihrer Oberkante verankert.

Zwischen der Befestigungsnut 46 und der Führungsnut 44 erstreckt sich in Längsrichtung ein im Querschnitt rechteckiger Führungskanal 47. Der Führungskanal 47 ist in Umfangsrichtung allseitig geschlossen.

Das Endstück 41 hat im weitesten Sinne die Gestalt eines Bechers mit einem Boden 48 und einen am Boden 48 angeformten dünnwandigen Kragen 49. Der Kragen weist einen in Längsrichtung des Endstücks 41 verlaufenden breiten Schlitz 51 auf, der von zwei Schlitzrändern 52 und 53 begrenzt ist. Im Bereich des Schlitzrandes 52 ist der Kragen 49, wie erkennbar, nach innen eingerollt und zwar so, dass das Endstück 41 mit dem Schlitzrand 52 bzw. dem daran angrenzenden Bereich des Kragens 49 in der Führungsnut 45 gleitend geführt ist.

Im Anschluss an den Schlitzrand 53 ist der Kragen 49 halbzylindrisch gekrümmt und geht anschließend in einen im Wesentlichen ebenen Dachbereich 54 über. Unmittelbar angrenzend an den Schlitzrand 53 ist eine nach innen zeigende Leiste 55 angeformt. Die Leiste 55 gleitet in der Führungsnut 44, während der kurze über die Leiste 55 überstehende Bereich zwischen dem Schlitzrand 53 und der Leiste 55 den Rest der Führungsnut 44 überdeckt.

Von dem Boden 48 geht eine Führungsstange 56 aus, die einen rechteckigen Querschnitt aufweist, und die in dem Führungskanal 47 läuft.

Die Führungsstange 56 ist lediglich an ihrem außen liegenden Ende verankert, während sie sonst im Abstand von dieser Verankerung allseits gegenüber dem Kragen 49 freigestellt ist. Insbesondere besteht ein durchgehender Spalt zwischen der Innenseite des Dachs 54 und der benachbarten Flachseite der Führungsstange 56. Dieser Spalt beginnt am freien Ende des Kragens 49 und reicht bis unmittelbar zu dem Boden 48.

Das Endstück 41 ist einschließlich der Führungsstange 56 ein als ein Teil gespritztes Kunststoffformteil. im montierten Zustand umschließt der Kragen 49 das Mittelstück 39 in Umfangsrichtung, mit Ausnahme eines rechteckigen Bereiches der Unterseite 43 entsprechend dem Schlitz 51. Der Kragen 49 folgt der Kontur des Querschnitts des Mittelstücks 39.

In Verlängerung der Führungsstange 56 enthält das Endstück 41 eine Tasche 57, die zur Verankerung des Führungsstücks 28 dient. In einer Seitenwand der Tasche 57 ist eine kreisrunde Öffnung 58 enthalten, die von dem offenen Ende der Tasche 57 her über einen Schlitz 59 zugänglich ist. In der Tasche 57 sitzt das Führungsstück 28, das aus einem einstückigen Kunststoffformteil besteht. Das Führungsstück 28 weist einen zylindrischen Führungselement 61 auf, dessen Querschnitt an den Querschnitt der Nutenkammer 26 in den beiden Führungsschienen 16 und 25 angepasst ist. An einem Ende des Führungselementes 61 ist ein Halsteil 62 ausgebildet, der durch die Nutenschlitze 27 hindurch passt. Der Halsteil 62 geht in einen Arm 63 über, der an seinem freien Ende einen kurzen Zapfen 64 trägt. Im montierten Zustand sitzt der Arm 63 in der Tasche 57, während der Zapfen 64 in der Rastöffnung 58 verrastet ist. Die Montage geschieht, indem der Zapfen 64 durch den Schlitz 59 hindurchgezwängt wird bis der Zapfen 64, wie erwähnt, in der Öffnung 58 verrastet ist. Der Arm 63 steht im montierten Zustand über den Boden 48 des Endstücks 41 nach außen über, und zwar in unmittelbarer Verlängerung der Führungsstange 56. Dadurch ist das Führungselement 61 von dem Boden 48 des Endstückes 41 entsprechend beabstandet, damit im Gebrauch der Boden 48 nicht an der Innenverkleidung 15 streift, jedoch der Schlitz 12 hinreichend verschlossen ist.

Wenn die beiden Endstücke 41 auf dem Mittelstück 39 lagerichtig sitzen, gleitet die Führungsstange 56 mit geringem Spiel und klemmfrei in dem Führungskanal 47. Da die Führungsstange 56 teleskopartig in dem Mittelstück 39 sitzt, kann sich so die effektive Länge des Auszugsprofils 21, d.h. der Abstand zwischen den beiden Führungselementen 61, an den jeweiligen Abstand zwischen den Nutenkammern 26 der beiden Führungsschienen 16 und 25 anpassen, entsprechend der Position des Auszugsprofils 21, längs den beiden Führungsschienen 16 und 25.

Der sich theoretisch ergebende Spalt zwischen den Stirnende des Mittelstücks 39 und dem Führungsstück 28, wird zur Oberseite hin durch den Kragen 49 des Endstücks 41 optisch überdeckt. Der Kragen 49 wird dabei mit seinem Schlitzrand 52 in der Führungsnut 45 geführt, während die Leiste 55 in die Führungsnut 44 eingreift. Das in Fig. 3 nach unten zeigende Dach 54 zeigt in der Gebrauchsstellung nach oben.

Die Tasche 57 ist in Verlängerung der Führungstange 56 angeordnet und führt gleichsam in die Führungsstange 56 hinein.

Durch die spezielle Anordnung der Tasche 57 werden möglichst geringe Kippkräfte erzeugt, wenn auf das Endstück 41 eine Kraft in Richtung parallel zur Längserstreckung des Mittelstücks 39 ausgeübt wird.

Wenn das mit einem solchen Auszugsprofil 21 ausgerüstete Heckfensterrollo 22 in einem Fahrzeug eingebaut wird, kann, wie erwähnt, der Auszugsschlitz 12 weitgehend verschlossen oder abgedeckt werden, zumindest soweit, dass keine Teile durch den Auszugsschlitz 12 hindurch fallen können oder niemand, insbesondere Kinder, nicht den Finger in irgendwelche offenen Spalten zwischen dem Auszugsprofil 21 und dem Auszugsschlitz 12 stecken können.

Bei eingefahrenem Heckfensterrollo 22, wie es in Fig. 1 gezeigt ist, nehmen die beiden Endstücke 41 relativ zu dem Mittelstück 39 ihrem maximale Außenstellung ein. Sie überdecken damit jenen Teil des Auszugsschlitzes 12, den das Mittelstück wegen seiner festen Länge nicht überdecken kann. Die Länge des Mittelstücks 39 ist so bemessen, dass das Auszugsprofil zwischen die Führungsschienen 16 und 25 passt, wenn das Auszugsprofil am oberen Ende der Führungsschienen 16, 25 steht, dort, wo diese wegen der eingezogenen Karosseriekontur den kleinsten Abstand voneinander haben.

Zum Ausfahren des in den Figuren gezeigten Heckscheibenrollos 22 wird der Getriebemotor 35 mit der entsprechenden Umdrehung in Gang gesetzt, wodurch die Schubglieder 37, 38 in Richtung auf das obere Ende der Führungsschienen 16, 25 in Gang gesetzt werden. Hierbei schieben sie die Führungselemente 61 des Auszugsprofils 21 vor sich her. Dadurch wird das Auszugsprofil 21 in Richtung auf die Oberkante 6 des Heckfensters 7 bewegt, wodurch gleichzeitig die Rollobahn 19 von er Wickelwelle 23 abgezogen wird. Der entgegengesetzt wirkende Federmotor 24 hält die Rollobahn 19 gespannt.

Zum Einfahren der Rollobahn 19 wird der Getriebemotor 35 mit der umgekehrten Drehrichtung in Gang gesetzt. Hierdurch werden die Schubglieder 37, 38 aus den Führungsschienen nach unten in Richtung auf die Wickelwelle 23 zurückgezogen. Der in der Wickelwelle 23 enthaltene Federmotor 24 wickelt entsprechend die Rollobahn 19 auf der Wickelwelle 23 auf, jeweils soweit es die Position der Schubglieder 37, 38 zulässt.

Das Einfahren ist beendet, wenn das Auszugsprofil 21 auf den Schlitzrändern 17, 18 aufliegt.

Beim Einfahren des Fensterrollos 22 wird das Auszugsprofil 21 wieder entsprechend in die Länge gezogen.

Da sich der Abstand zwischen den Führungsschienen 16, 25 aus der Sicht des Auszugsprofils 21 bei dieser Bewegung ständig verkleinert, bewegen sich die beiden Endstücke 41 in Richtung auf das Mittelstück 39 zu. Die Führungsstangen 56 wandern dabei teleskopartig in das Mittelstück 39 hinein.

Die mechanische Kraftübertragung von den Schubgliedern 37, 38 auf die Rollobahn 19 geschieht nicht über den Kragen 49, sondern ausschließlich über die Führungsstange 56. Die formschlüssige Verbindung zwischen den Schlitzrändern 52 und 53 und dem Mittelstück soll lediglich den Kragen an dem Mittelstück 39 führen, wenn jemand versehentlich gegen das Endstück 41 stößt.

Aufgrund der Anordnung umgreift das Endstück 41 mit seinem Kragen 49 das Mittelstück 39 in dem entsprechenden Bereich, wobei lediglich ein Teil der Unterseite 43 frei bleibt, damit der Kragen 49 nicht mit der Rollobahn 19 kollidiert, die über die gesamte Länge des Mittelstücks 39 mit diesem verbunden ist.

Bei dem gezeigten Ausführungsbeispiel nach Fig. 3 ragen die Führungsstangen 56 lediglich über eine solche Strecke in das Mittelstück 39 hinein, dass eine klemmfreie teleskopartige Bewegung möglich ist.

Das Mittelstück 39 ist schwimmend gelagert und positioniert sich zwischen den zwangsläufig geführten Endstücken 41 aufgrund der seitelichen Führungskräfte der Rollobahn 19.

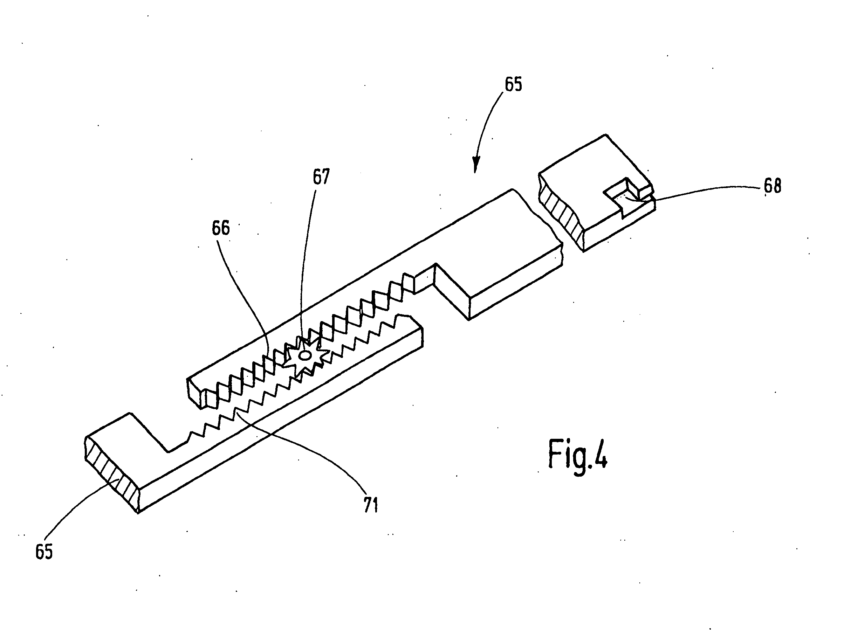

Wenn eine Zwangszentrierung gewünscht ist, kann zusätzlich die Anordnung nach Fig. 4 verwendet werden. Hierzu wird die Führungsstange 56 mit einer Koppelstange 65 verbunden, die in dem Führungskanal 47 läuft. Die Koppelstange 65 ist an ihrem innenliegenden Ende als Zahnstange 66 ausgebildet. Die Zahnstange 66 kämmt mit einem Zahnrad 67, das auf einer nicht veranschaulichten Achse ortsfest in dem Mittelstück 39 verankert ist. Diese Achse führt durch entsprechende Bohrungen an der Unterseite und bei der Oberseite 42. Beispielsweise wird die Achse von einer Schraube gebildet. Um die Koppelstange mit der Führungsstange 56 zu verbinden, kann sie am außenliegenden Ende mit einer Tasche versehen sein, in die ein entsprechender komplimentärer Haken an der Führungsstange 56 eingreift. Eine bildliche Darstellung des Verhakens zwischen der Koppelstange und der Führungsstange ist zum Verständnis der Erfindung nicht erforderlich.

Eine ähnliche Koppelstange ist mit der Führungsstange 56 des anderen Endstücks 41 verbunden. Auch diese Koppelstange 69 geht an ihrem inneren Ende in eine Zahnstange 71 über, die der Zahnstange 66 bezüglich des Zahnrads 67 gegenüber liegt. Mit Hilfe dieses Getriebes aus den beiden Zahnstangen 66, 71 sowie dem ortsfest gelagerten Zahnrad 67 wird die Bewegung einer der beiden Koppelstangen 65 oder 69 auf die jeweils andere Koppelstange 65, 69 übertragen, und zwar mit demselben Hub, jedoch in der entgegengesetzten Bewegungsrichtung.

Mit Hilfe der in Fig. 4 gezeigten Getriebeanordnung kann somit die Mittelstellung zwischen den beiden Endstücken 41 zwangsläufig aufrecht erhalten werden.

Ein Heckfensterrollo für Kraftfahrzeuge weist ein Auszugsprofil auf, das mit teleskopartig verschiebbaren Endstücken versehen ist. Die Endstücke sind so gestaltet, dass im ausgezogenen Zustand des Auszugsprofils Auszugsschlitze in der Hutablage über seine gesamte Länge von dem Auszugsprofil verschlossen ist.

## Patentansprüche

1. Heckfensterrollo (22) für Kraftfahrzeuge (1), mit einer drehbar gelagerten Wickelwelle (23),
mit einer Rollobahn (19), die mit einer Kante an der Wickelwelle (23) befestigt ist, eine abliegende Kante aufweist und die durch einen Auszugsschlitz (12) ausziehbar ist,
mit seitlich der aufgespannten Rollbahn (19) verlaufenden Führungsschienen (16,25),
mit einem Auszugsprofil (21), das an der abliegenden Kante der Rollobahn (19) befestigt ist, das ein Mittelstück (39) und zwei Endstücke (41) aufweist, die gegenüber dem Mittelstück (39) verschiebbar sind, mit einer Antriebseinrichtung (24,35), zumindest für die Wickewelle (23), um die Wickelwelle (23) zumindest im Sinne des Aufwickelns der Rollobahn (19) auf die Wickelwelle (23), in Umdrehungen zu versetzen,
**dadurch gekennzeichnet, dass** das Auszugsprofil (21) im Querschnitt derart gestaltet ist, das Mittelstück (39) zusammen mit den Endstücken (41) bei eingefahrenem Heckfensterrollo (22) den Auszugsschlitz (12) verschließt, und
jedes Endstück (41) angenähert die Form eines Bechers aufweist, mit einem Boden (48) und einem daran angeformten Kragen (49), der einen in Längsrichtung des Endstücks (41) verlaufenden Schlitz (51) aufweist, der von zwei Schlitzrändern (52,53) begrenzt ist,
mit Führungsstücken (28), von denen jedes aus dem Boden (48) des zugehörigen Endstücks (41) auskragt und in der zugehörigen Führungsschiene (16,25) gleitet, wodurch das Auszugsprofil (21), das sich zwischen den Führungsschienen (16,25) befindet in diesen geführt ist.

2. Heckfensterrollo nach Anspruch 1, **dadurch gekennzeichnet, dass** die Wickelwelle (23) unterhalb einer Hutablage (11) drehbar gelagert ist.

3. Heckfensterrollo nach Anspruch 2, **dadurch gekennzeichnet, dass** der Auszugsschlitz (12) in der Hutablage (11) enthalten ist und sich über die gesamte Breite der Hutablage (11) erstreckt.

4. Heckfensterrollo nach Anspruch 1, **dadurch gekennzeichnet, dass** die Rollobahn (19) einen trapezförmigen Zuschnitt aufweist, dessen kurze Kante an dem Auszugsprofil (21) befestigt ist.

5. Heckfensterrollo nach Anspruch 1, **dadurch gekennzeichnet, dass** die Führungsschienen (16,25) in Innenverkleidungsteilen (15) des Fahrzeugs (1), zu dem das Heckscheibenrollo (22) gehört, integriert sind.

6. Heckfensterrollo nach Anspruch 1, **dadurch gekennzeichnet, dass** das Auszugsprofil (21) eine Breite hat, die gleich oder größer als die Breite des Auszugsschlitz (12) ist, gemessen als Abstand zwischen dessen Schlitzrändern (17,18).

7. Heckfensterrollo nach Anspruch 1, **dadurch gekennzeichnet, dass** das Mittelstück (39) des Auszugsprofils (21) ein Aluminiumstrangpressprofil ist.

8. Heckfensterrollo nach Anspruch 1, **dadurch gekennzeichnet, dass** das Mittelstück (39) einen in Längsrichtung durchgehenden Führungskanal (47) enthält.

9. Heckfensterrollo nach Anspruch 1, **dadurch gekennzeichnet, dass** das Mittelstück (39) des Auszugsprofils (21) seitlich wenigstens zwei Führungsnuten (44,45) enthält, die über die Länge des Mittelstücks (39) durchgeht.

10. Heckfensterrollo nach Anspruch 1, **dadurch gekennzeichnet, dass** das Mittelstück (39) einen durchgehende Nut (46) enthält, in der die Rollobahn (19) verankert ist.

11. Heckfensterrollo nach Anspruch 1, **dadurch gekennzeichnet, dass** die Länge des Mittelstücks (39) zumindest angenähert der Länge der von der Wickelwelle (23) abliegenden Kante der Rollobahn (19) entspricht.

12. Heckfensterrollo nach Anspruch 1, **dadurch gekennzeichnet, dass** das Mittelstück (39) einen Außenumriss aufweist, dessen Höhe klein ist gegenüber der Breite gemessen in Richtung quer zur Längserstreckung des Mittelstücks (39).

13. Heckfensterrollo nach Anspruch 9, **dadurch gekennzeichnet, dass** das Mittelstück (39) in in Längsrichtung des Mittelstücks (39) verlaufende Führungsnuten (44,45) aufweist, in denen an die Schlitzränder (52,53) angrenzende Bereiche verschieblich aufgenommen sind.

14. Heckfensterrollo nach Anspruch 9, **dadurch gekennzeichnet, dass** wenigstens einer der Schlitzränder (52,53) in wenigsten einer der Führungsnuten (44,45) des Mittelstücks (39) aufgenommen ist.

15. Heckfensterrollo nach Anspruch 1, **dadurch gekennzeichnet, dass** das Führungsstück (28) mit dem Endstück (41) verrastet ist.

16. Heckfensterrollo nach Anspruch 1, **dadurch gekennzeichnet, dass** in dem Endstück (41) eine mit dem Schlitz (51) des Endstückes (41) fluchtende längliche Führungsstange (56) vorgesehen ist, die in einem entsprechenden Führungskanal (47) in dem Mittelstück (39) teleskopartig längsverschieblich geführt ist.

17. Heckfensterrollo nach Anspruch 1, **dadurch gekennzeichnet, dass** mit jedem Endstück (41) eine Zahnstange (66,71) gekuppelt ist.

18. Heckfensterrollo nach Anspruch 17, **dadurch gekennzeichnet, dass** die beiden Zahnstangen (66,71) der beiden Endstücke (41) zusammen mit einem in dem Mittelstück (39) drehbar gelagerten Zahnrad (67) eine Differenzialgetriebe bilden derart, dass die Bewegung eines Endstücks (41) gegenüber dem Mittelstück (39) eine betragsmäßig gleiche Bewegung des anderen Endstücks (41) jedoch mit entgegengesetzter Richtung hervorruft.

19. Heckfensterrollo nach Anspruch 1, **dadurch gekennzeichnet, dass** zu der Antriebseinrichtung (24,35) ein Federmotor (24) gehört, der mit der Wickelwelle (23) gekoppelt ist um die Wickelwelle (23) im Sinne des Aufwickelns der Rollobahn (19) vorzuspannen.

20. Heckfensterrollo nach Anspruch 1, **dadurch gekennzeichnet, dass** die Antriebseinrichtung (24,35) einen Getriebemotor (35) umfasst, der über linienförmige Betätigungsglieder (37,38) mit dem Auszugsprofil (21) gekoppelt ist.

21. Heckfensterrollo nach Anspruch 20, **dadurch gekennzeichnet, dass** die linienförmigen Betätigungsglieder (37,38) eine biegeelastische rotationssymmetrische Zahnstange bilden.

22. Heckfensterrollo nach Anspruch 20, **dadurch gekennzeichnet, dass** die Betätigungsglieder (37,38) als Schubglieder ausgebildet sind.

23. Heckfensterrollo nach Anspruch 20, **dadurch gekennzeichnet, dass** Führungsrohre (29,31) vorgesehen sind, die die Betätigungsglieder (37,38) im Bereich zwischen der betreffenden Führungsschiene (16,25) und dem Antriebsmotor (35) ausknicksicher führen.

## Claims

1. Rear window roller blind (22) for motor vehicles (1),
with a rotatably mounted winding shaft (23),
with a blind sheet (19), which is fastened at one edge to the winding shaft (23), has a remote edge and can be pulled out through a pull-out slot (12),
with guide rails (16, 25) running laterally of the spanned blind sheet (19),
with a pull-out profile (21), which is fastened at the remote edge of the blind sheet (19), has a central piece (39) and two end pieces (41), which are displaceable in relation to the central piece (39),
with a drive means (24, 35) at least for the winding shaft (23) to set the winding shaft (23) in rotation at least in the sense of winding up the blind sheet (19) onto the winding shaft (23),
**characterised in that**
the cross-section of the pull-out profile (21) is configured in such a manner that the central piece (39) together with the end pieces (41) closes the pull-out slot (12) when the rear window roller blind (22) is retracted, and
each end piece (41) has approximately the form of a bowl, with a base (48) and a collar (49) moulded thereon, which has a slot (51) running in the longitudinal direction of the end piece (41) and delimited by two slot edges (52, 53),
with guide pieces (28), each of which projects from the base (48) of the associated end piece (41) and slides in the associated guide rail (16, 25), as a result of which the pull-out profile (21), which is located between the guide rails (16, 25), is guided in these.

2. Rear window roller blind according to claim 1, **characterised in that** the winding shaft (23) is rotatably mounted below a parcel shelf (11).

3. Rear window roller blind according to claim 2, **characterised in that** the pull-out slot (12) is contained in the parcel shelf (11) and extends over the entire width of the parcel shelf (11).

4. Rear window roller blind according to claim 1, **characterised in that** the blind sheet (19) has a trapezoidal blank, the short edge of which is fastened to the pull-out profile (21).

5. Rear window roller blind according to claim 1, **characterised in that** the guide rails (16, 25) are integrated into internal lining parts (15) of the vehicle (1), to which the rear window roller blind (22) belongs.

6. Rear window roller blind according to claim 1, **characterised in that** the pull-out profile (21) has a width, which is equal to or larger than the width of the pull-out slot (12), measured as distance between the slot edges (17, 18) thereof.

7. Rear window roller blind according to claim 1, **characterised in that** the central piece (39) of the pull-out profile (21) is an aluminium extruded section.

8. Rear window roller blind according to claim 1, **characterised in that** the central piece (39) contains a guide channel (47) extending continuously in the longitudinal direction.

9. Rear window roller blind according to claim 1, **characterised in that** the central piece (39) of the pull-out profile (21) contains at least two guide grooves (44, 45) on the side, which extend continuously over the length of the central piece (39).

10. Rear window roller blind according to claim 1, **characterised in that** the central piece (39) contains a continuous groove (46), in which the blind sheet (19) is anchored.

11. Rear window roller blind according to claim 1, **characterised in that** the length of the central piece (39) corresponds at least approximately to the length of the edge of the blind sheet (19) remote from the winding shaft (23).

12. Rear window roller blind according to claim 1, **characterised in that** the central piece (39) has an external contour, the height of which is small in relation to the width measured in a direction transverse to the longitudinal extent of the central piece (39).

13. Rear window roller blind according to claim 9, **characterised in that** the central piece (39) has guide grooves (44, 45) running in the longitudinal direction of the central piece (39), in which regions adjoining the slot edges (52, 53) are displaceably received.

14. Rear window roller blind according to claim 9, **characterised in that** at least one of the slot edges (52, 53) is received in at least one of the guide grooves (44, 45) of the central piece (39).

15. Rear window roller blind according to claim 1, **characterised in that** the guide piece (28) is locked to the end piece (41).

16. Rear window roller blind according to claim 1, **characterised in that** an elongated guide rod (56), which is flush with the slot (51) and is guided to be longitudinally displaceable in a corresponding guide channel (47) in the central piece (39) in the manner of a telescope, is provided in the end piece (41).

17. Rear window roller blind according to claim 1, **characterised in that** a toothed rack (66, 71) is coupled to each end piece (41).

18. Rear window roller blind according to claim 17, **characterised in that** the two toothed racks (66, 71) of the two end pieces (41) together with a gear wheel (67) rotatably mounted in the central piece (39) form a differential gear in such a way that the movement of one end piece (41) in relation to the central piece (39) causes a movement of the same magnitude of the other end piece (41), but in the opposite direction.

19. Rear window roller blind according to claim 1, **characterised in that** the drive means (24, 35) includes a spring motor (24), which is coupled to the winding shaft (23) to bias the winding shaft (23) in the sense of winding up the blind sheet (19).

20. Rear window roller blind according to claim 1, **characterised in that** the drive means (24, 35) comprises a geared motor (35), which is coupled to the pull-out profile (21) by means of linear actuating members (37, 38).

21. Rear window roller blind according to claim 20, **characterised in that** the linear actuating members (37, 38) form a pliant rotationally symmetric toothed rack.

22. Rear window roller blind according to claim 20, **characterised in that** the actuating members (37, 38) are configured as push members.

23. Rear window roller blind according to claim 20, **characterised in that** guide tubes (29, 31) are provided, which guide the actuating members (37, 38) in a buckle-resistant manner in the region between the respective guide rail (16, 25) and the drive motor (35).

## Revendications

1. Store de lunette arrière (22) pour véhicules automobiles (1),
comprenant un arbre d'enroulement (23) monté tournant,
comprenant une bande de store (19) qui est fixée par un bord à l'arbre d'enroulement (23), présente un bord éloigné et peut être déroulée en passant par une fente de sortie (12),
comprenant des rails de guidage (16, 25) s'étendant sur les côtés de la bande de store (19) tendue,
comprenant un profilé de traction (21) qui se situe sur le bord éloigné de la bande de store (19) et qui comporte une partie centrale (39) et deux parties d'extrémité (41) pouvant être déplacées en translation par rapport à la partie centrale (39),
comprenant un dispositif d'entraînement (24, 35), au moins pour l'arbre d'enroulement (23), pour mettre l'arbre d'enroulement (23) en rotation, au moins dans le sens de l'enroulement de la bande de store (19) sur l'arbre (23),
**caractérisé par le fait que** le profilé de traction (21) est agencé avec une section telle que la partie centrale (39), conjointement avec les parties d'extrémité (41), ferme la fente de sortie (12) lorsque le store de lunette arrière (22) est rentré, et
chaque partie d'extrémité (41) présente approximativement la forme d'un godet, avec un fond (48) et un rebord (49) qui est réalisé d'un seul tenant avec le godet et présente une fente (51) s'étendant dans le sens longitudinal de la partie d'extrémité (41) et délimitée par deux bords de fente (52, 53),
comprenant des pièces de guidage (28) qui font saillie depuis le fond (48) de la partie d'extrémité (41) associée et coulissent dans le rail de guidage (16, 25) associé, grâce à quoi le profilé de traction (21), qui se trouve entre les rails (16, 25), est guidé dans ces derniers.

2. Store de lunette arrière selon la revendication 1, **caractérisé par le fait que** l'arbre d'enroulement (23) est monté tournant sous une plage arrière (11).

3. Store de lunette arrière selon la revendication 2, **caractérisé par le fait que** la fente de sortie (12) est prévue dans la plage arrière (11) et s'étend sur toute la largeur de la plage arrière (11).

4. Store de lunette arrière selon la revendication 1, **caractérisé par le fait que** la bande de store (19) présente une forme trapézoïdale dont le petit côté est fixé au profilé de traction (21).

5. Store de lunette arrière selon la revendication 1, **caractérisé par le fait que** les rails de guidage (16, 25) sont intégrés dans des éléments d'habillage intérieur (15) du véhicule (1) dont fait partie le store de lunette arrière (22).

6. Store de lunette arrière selon la revendication 1, **caractérisé par le fait que** le profilé de traction (21) a une largeur qui est égale ou supérieure à la largeur de la fente de sortie (12), mesurée en tant que distance entre les bords de fente (17, 18).

7. Store de lunette arrière selon la revendication 1, **caractérisé par le fait que** la partie centrale (39) du profilé de traction (21) est un profilé extrudé en aluminium.

8. Store de lunette arrière selon la revendication 1, **caractérisé par le fait que** la partie centrale (39) comporte un canal de guidage (47) continu dans le sens de la longueur.

9. Store de lunette arrière selon la revendication 1, **caractérisé par le fait que** la partie centrale (39) du profilé de traction (21) comporte sur les côtés au moins deux rainures de guidage (44, 45) qui s'étendent sur toute la longueur de la partie centrale (39).

10. Store de lunette arrière selon la revendication 1, **caractérisé par le fait que** la partie centrale (39) comporte une rainure (46) continue, dans laquelle est fixée la bande de store (19).

11. Store de lunette arrière selon la revendication 1, **caractérisé par le fait que** la longueur de la partie centrale (39) correspond au moins approximativement à la longueur du bord de la bande de store (19) qui est éloigné de l'arbre d'enroulement (23).

12. Store de lunette arrière selon la revendication 1, **caractérisé par le fait que** la partie centrale (39) présente un contour dont la hauteur est petite par rapport à la largeur, mesurée dans le sens perpendiculaire à la longueur de la partie centrale (39).

13. Store de lunette arrière selon la revendication 9, **caractérisé par le fait que** la partie centrale (39) présente des rainures de guidage (44, 45) qui s'étendent dans le sens longitudinal de la partie centrale (39) et dans lesquelles sont logées de façon déplaçable des zones adjacentes aux bords de fente (52, 53).

14. Store de lunette arrière selon la revendication 9, **caractérisé par le fait qu'**au moins un des bords de fente (52, 53) est disposé dans au moins une des rainures de guidage (44, 45) de la partie centrale (39).

15. Store de lunette arrière selon la revendication 1, **caractérisé par le fait que** la pièce de guidage (28) est reliée par encliquetage à la partie d'extrémité (41).

16. Store de lunette arrière selon la revendication 1, **caractérisé par le fait qu'**il est prévu dans la partie d'extrémité (41) une barre de guidage (56) de forme allongée qui est alignée avec la fente (51) de la partie d'extrémité (41) et est guidée de manière télescopique, avec possibilité de déplacement longitudinal, dans un canal de guidage (47) correspondant dans la partie centrale (39).

17. Store de lunette arrière selon la revendication 1, **caractérisé par le fait qu'**une crémaillère (66, 71) est accouplée à chaque partie d'extrémité (41).

18. Store de lunette arrière selon la revendication 17, **caractérisé par le fait que** les deux crémaillères (66, 71) des deux parties d'extrémité (41) forment avec un pignon (67), monté tournant dans la partie centrale (39), un mécanisme différentiel, de manière à ce que le mouvement d'une partie d'extrémité (41) par rapport à la partie centrale (39) provoque un mouvement de même valeur de l'autre partie d'extrémité (41), mais dans le sens opposé.

19. Store de lunette arrière selon la revendication 1, **caractérisé par le fait que** le dispositif d'entraînement (24, 35) comprend un moteur à ressort (24) qui est accouplé à l'arbre d'enroulement (23), afin de mettre l'arbre (23) sous précontrainte dans le sens de l'enroulement de la bande de store (19).

20. Store de lunette arrière selon la revendication 1, **caractérisé par le fait que** le dispositif d'entraînement (24, 35) comprend un motoréducteur (35) qui est accouplé au profilé de traction (21) par l'intermédiaire d'éléments d'actionnement (37, 38) linéaires.

21. Store de lunette arrière selon la revendication 20, **caractérisé par le fait que** les éléments d'actionnement (37, 38) linéaires forment une crémaillère à symétrie de révolution, élastique en flexion.

22. Store de lunette arrière selon la revendication 20, **caractérisé par le fait que** les éléments d'actionnement (37, 38) sont réalisés sous forme d'éléments de poussée.

23. Store de lunette arrière selon la revendication 20, **caractérisé par le fait qu'**il est prévu des tubes de guidage (29, 31) qui guident les éléments d'actionnement (37, 38) de manière à résister au flambage, dans la zone située entre le rail de guidage (16, 25) concerné et le moteur d'entraînement (35).
